# EUROPEAN PATENT APPLICATION

(11) **EP 2 366 950 A1**
(43) Date of publication of application: **21.09.2011**
(21) Application number: 11158270.6
(22) Date of filing: 15.03.2011
(51) Int. Cl.: F23J 13/00, F23J 15/02

(54) **Chimney flue**

(30) Priority: 19.03.2010 IT MI20100453
(71) Applicant: Poliedra s.r.l., 20833 Giussano (IT)
(72) Inventor: Crescini, Damiano, 25064 Gussago (BS) (IT); Vigano, Emanuele, 20833 Paina Di Giussano (MB) (IT)
(74) Representative: Mittler, Enrico

(57) **Abstract**

A chimney flue (1) is described comprising at least one conduit for outputting flue gas toward the external environment; said conduit comprising at least one wall (2) in contact with the flue gas. The chimney flue comprises at least one thermoelectric generator (3) supplied by the temperature difference between said at least one wall (2) and the external environment and means (4) electrically supplied by said at least one thermoelectric generator. (Fig. 2)

## Description

The present invention relates to a chimney flue.

It is known to install chimney flues to disperse flue gas outdoors. Said chimney flues are used for outputting, toward the external environment, both flue gas of boilers or fireplaces used for domestic heating and for outputting, toward the external environment, flue gas from industrial furnaces for heating, firing or melting materials.

In view of the state of the art, it is the object of the present invention to provide a chimney flue which is different from the known ones.

In accordance with the present invention, said object is reached by means of a chimney flue as defined in claim 1.

The features and advantages of the present invention will become apparent from the following detailed description of practical embodiments thereof, shown by way of non-limiting examples in the accompanying drawings, in which:
figure 1 shows a perspective of a chimney flue in accordance with a first embodiment of the present invention;
figure 2 shows a perspective of the internal part of the chimney flue in figure 1;
figure 3 shows a part of the chimney flue in figure 1;
figure 4 is a front view of the chimney flue in figure 1;
figure 5 is a sectional view of the chimney flue in figure 4, according to the line V-V;
figure 6 is a sectional view of the chimney flue in figure 4, according to the line VI-VI;
figure 7 is a sectional view of the chimney flue in figure 4, according to the line VII-VII;
figure 8 is a block diagram of the chimney flue in figure 1;
figure 9 shows a sectional vertical view of a chimney flue in accordance with a second embodiment of the present invention;
figure 10 shows a sectional vertical view of a chimney flue in accordance with a third embodiment of the present invention;
figure 11 shows a part of the chimney flue in figure 1, in greater detail;
figure 12 shows a module of the chimney flue in figure 11;
figure 13 shows a cross-section of the module in figure 12 according to the line XIII-XIII;
figure 14 shows a cross-section of the module in figure 12 according to the line XIV-XIV.

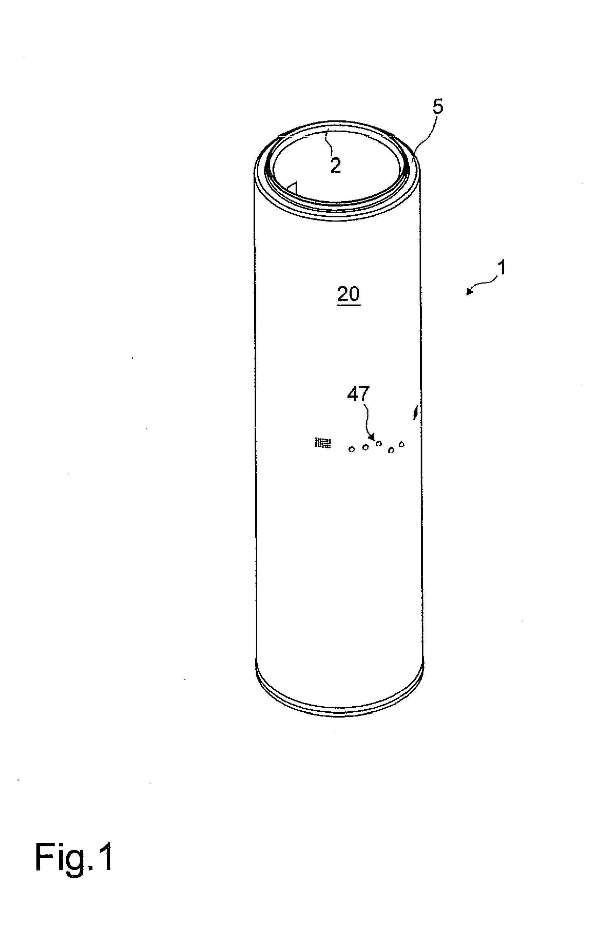

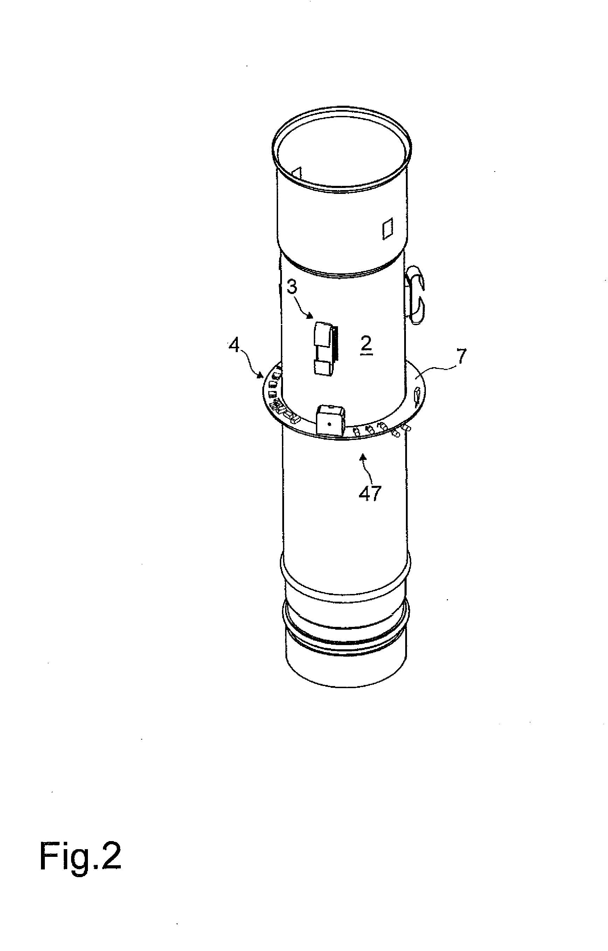

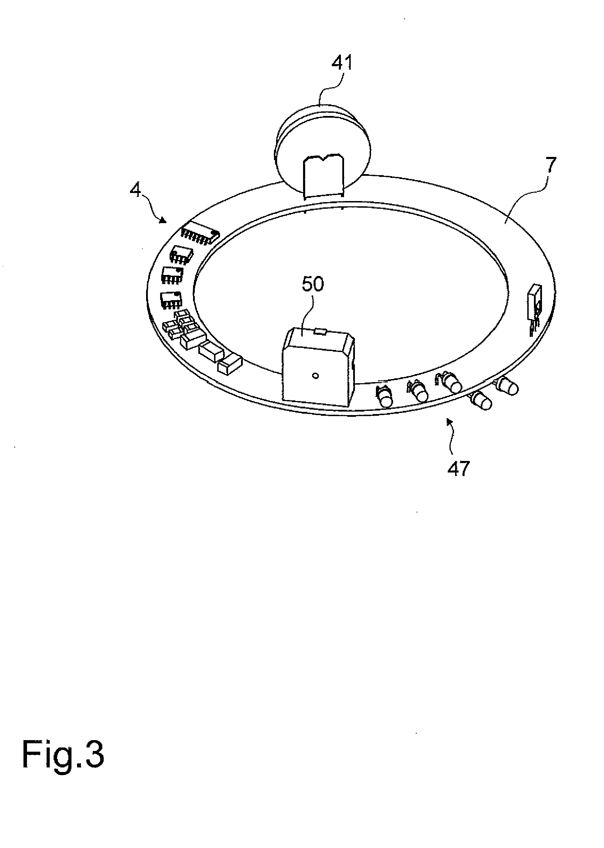

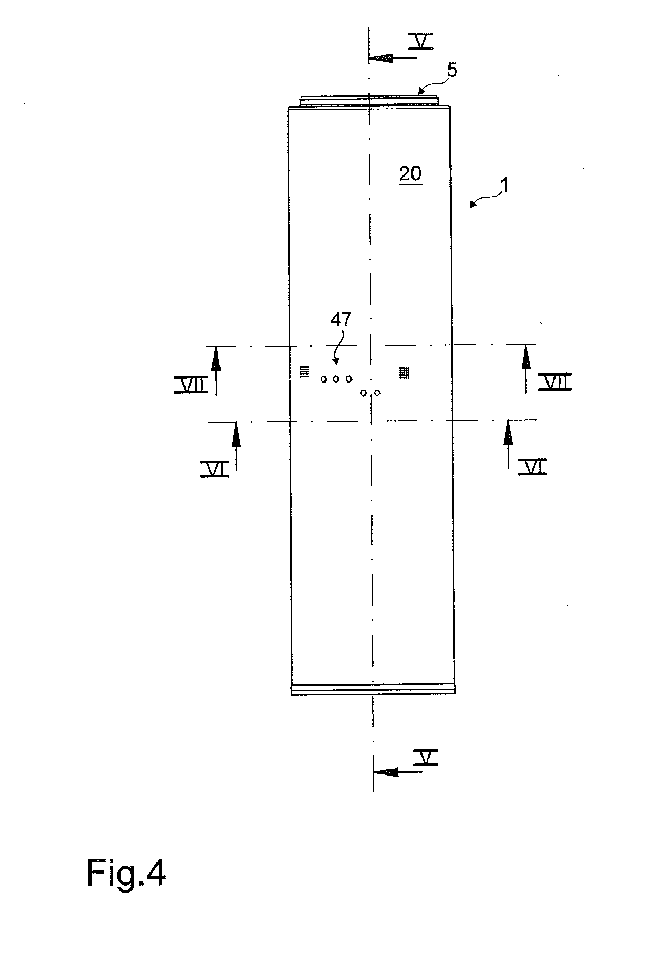

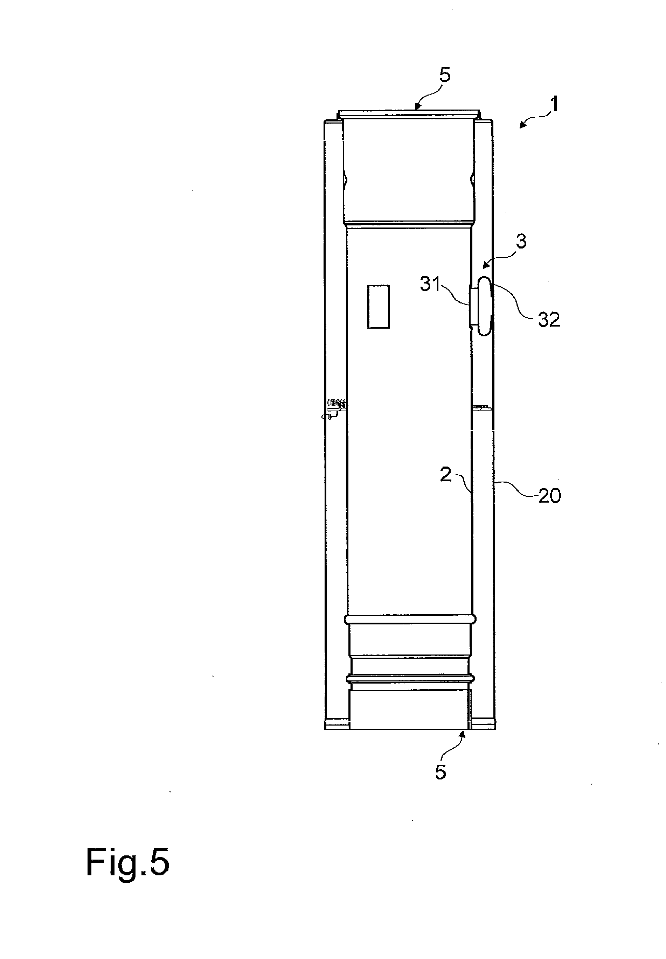

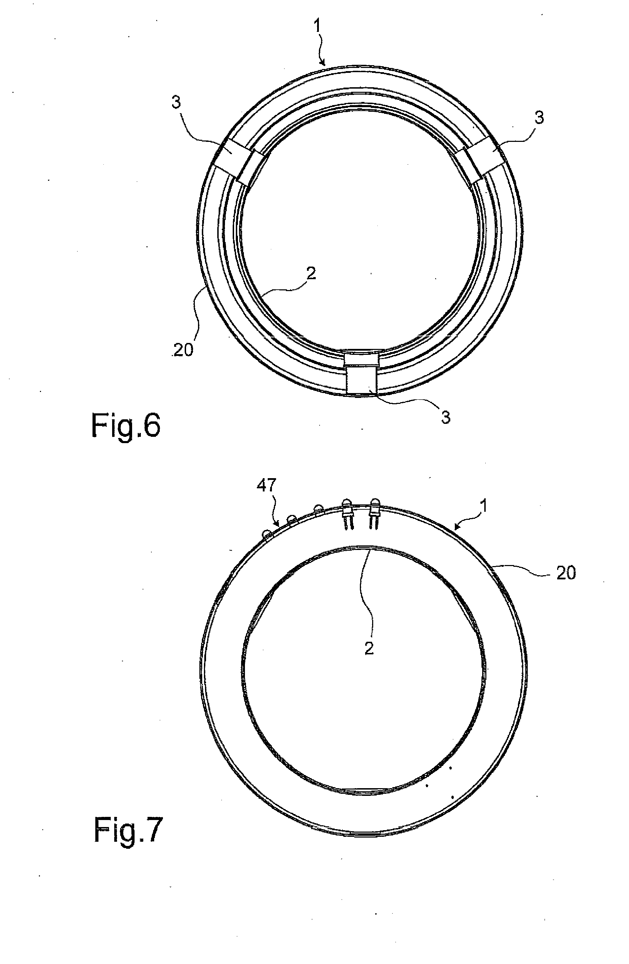

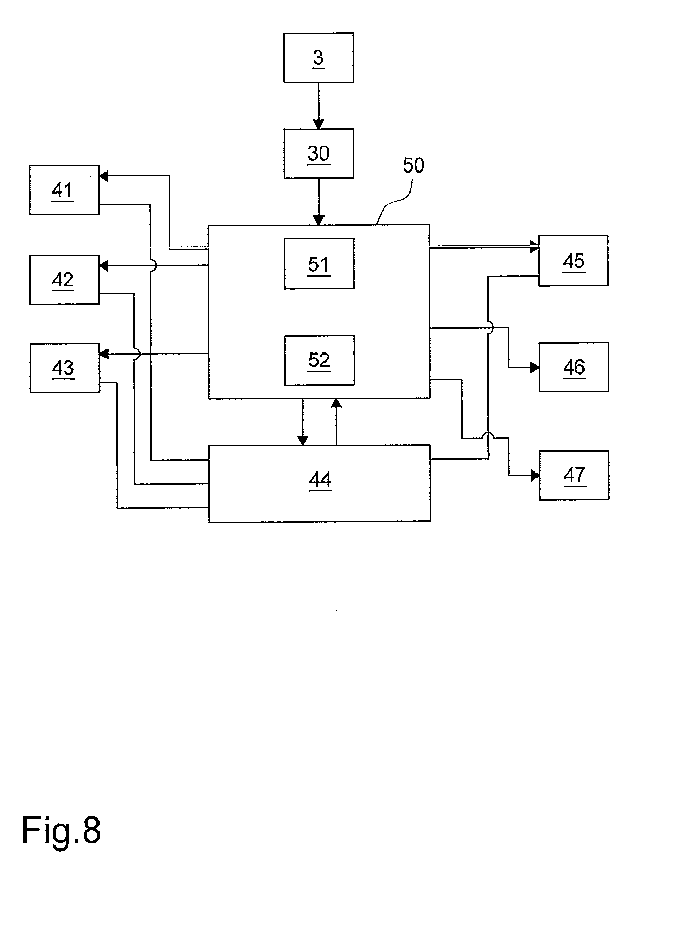

With reference to figures 1-8, a chimney flue 1 is shown in accordance with a first embodiment of the present invention. Chimney flue 1 comprises a conduit for outputting flue gas toward the external environment with at least one wall 2, preferably a cylindrical wall; said wall 2 is in contact with the flue gas. Chimney flue 1 comprises at least one thermoelectric generator 3 supplied by the temperature difference between said at least one wall 2 and the external environment. The chimney flue comprises means 4 electrically supplied by the thermoelectric generator 3. Wall 2 may be made up with plastic material or with a metallic material, for example steel.

Preferably chimney flue 1 is of the double-wall type and in addition to wall 2, comprises another metallic wall 20 which is axial to wall 2 and external thereto; the space between the walls 2 and 20 is filled with an insulating material, e.g. air or mineral wool.

The thermoelectric generator 3 converts the thermal energy of the flue gas into electric energy; preferably said thermoelectric generator 3 is a Peltier cell supplied by the temperature difference between wall 2 in contact with the flue gas and the metallic wall 20 in contact with the external environment, and insulated from the metallic wall 2 by the insulating material.

The means 4 supplied by the thermoelectric generator 3 comprise monitoring and alert systems: the means 4 are preferably anchored to a ring 7 which transversally extends to the cylindrical wall 2. In particular, the means 4 comprise at least one sensor 41-43 for detecting a parameter of flue gas, i.e. a temperature sensor 41 adapted to detect the temperature of the flue gas outlet from chimney flue 1, one humidity sensor 42 for detecting the humidity of the flue gas outlet from chimney flue 1 and preferably one sensor 43 adapted to detect the presence of harmful substances in the flue gas, e.g. carbon monoxide.

A monitoring device 44 is connected to the sensors 41-43 to monitor the optimal operation of the heating system or the like to which chimney flue 1 is connected; device 44 is adapted to receive the data detected by the sensors 41-43 and to compare them with the stored data for monitoring the optimal operation of chimney flue 1.

The chimney flue comprises one or several visual (e.g. LED) or acoustic alert devices 47 activated by the same device 44, by means of a unit 50, in case of non-optimal operation of the apparatus to which chimney flue 1 is connected, i.e. when the parameter detected by the sensor overcomes a pre-established threshold. For example, certain alarm devices 47 may be provided which are activated respectively when the temperature of the flue gas outputted through chimney flue 1 overcomes a pre-established temperature Tp, when the humidity of the flue gas overcomes a pre-established humidity Up and when the concentration of the harmful substances in the flue gas outputted through chimney flue 1 overcomes a pre-established concentration Cp.

A device or interface 45 may be provided for sending the detections of the sensors 41-43 to a central managing unit of the heating system; said detections may be sent via cable or by means of wireless connection (e.g. GSM).

A charge accumulator 46 may be provided to store the excess electric energy provided by the thermoelectric generator 3.

The chimney flue also comprises a unit 50 for managing the electric energy outlet from the thermoelectric generator 3. Said unit defines the times for activating the sensors 41-43 in pre-established time periods, for activating device 44 for receiving the data detected by the sensors, for activating the alarms devices 47 if required and for activating interface 45 so as to send the data detected by the sensors to the central management unit of the heating system; the management system 50 also provides managing the accumulation of the non-used electric energy in accumulator 46.

Unit 50 preferably comprises a microprocessor 51 and a memory 52 in which a software or firmware for managing the means 4 is installed and is operative.

Chimney flue 1 comprises, in the two end parts thereof, two inlets 5 specifically shaped, which are capable of facilitating the engagement of chimney flue 1 in the apparatuses for outputting the flue gas exhausted by a heating apparatus or the like so as to make a chimney for the outputting of the flue gas itself.

The internal part of wall 2 is in contact with the flue gas, for the entire duration of the output process, while the metallic wall 20 is in contact with the environment. This generates a temperature difference between wall 2 and the environment which may be exploited by the thermoelectric generator 3 to generate energy. The thermoelectric generator 3 comprises two opposite and separate surfaces 31, 32, one of which is arranged in contact with wall 2 of chimney flue 1 while the other with wall 20 or with an element conveniently shaped to disperse heat into the environment if the chimney flue is of single-wall type. When the two surfaces 31, 32 are subjected to a significant temperature difference, a difference in electric potential is generated whose intensity is a function of the temperature gradient. Such a voltage difference is used to supply the sensors 41-43 and the devices 44-47.

The power extracted by the thermoelectric generator 3 is to be conveniently managed by means of unit 50 again to obtain the voltage and the current required for the operation of the sensors 41-43, of the alarms systems 47 and of the devices 44 and 45. Then, in the case that such an energy exceeds the needs (i.e.: active monitoring but systems not in alert mode) the batteries 46 are used as accumulation means.

The employment of a step-up converter 30 adapted to increase the voltage coming from the thermoelectric generator (which may vary from approximately 20-30 mV to 300-400 mV) to the reference voltage of the standard electronics available on the market (typically 2.35 V, 3.3 V, 4.1 V, and 5 V) may be provided for supplying the means 4.

Unit 50 autonomously manages any energy surplus by directing it to battery 46 and charging it. Unit 50 preferably comprises microcontroller 51 and memory 52 but may only comprise devices of analogue type.

The microcontroller is programmed with a firmware for managing the sensors 41-43, the device 44 for receiving the data, the charge accumulator 46 and the alarm devices 47. The firmware preferably operates by activating in sequential way the various devices supplied by the thermoelectric generator 3, the sensors 41-43 and the devices 44-47; thereby energy consumption peaks are not generated. For example, sensors 41-43 are activated in successive instants T1, T2 and T3, unit 44 for receiving the data coming from the sensors is activated in a time instant T4 following the time instants T1-T3, the activation of the visual or acoustic alarm devices 47 is activated in a successive time instant T5 and the wireless interface 45 is activated in a successive time instant T8. Under specific conditions, the firmware determines the accumulation of the surplus energy in accumulator 46. The energy stored therein may also be used, for example, to ensure remote communication of the system status by means of wireless transmission, preferably of GSM type, in adverse conditions.

Preferably chimney flue 1 comprises three thermoelectric generators 3, for example Peltier cells, arranged at 120° from each other between wall 2 and metallic wall 20; the three thermoelectric generators 3 are connected in series and provide the electric supply to unit 50 which distributes it to the means 4.

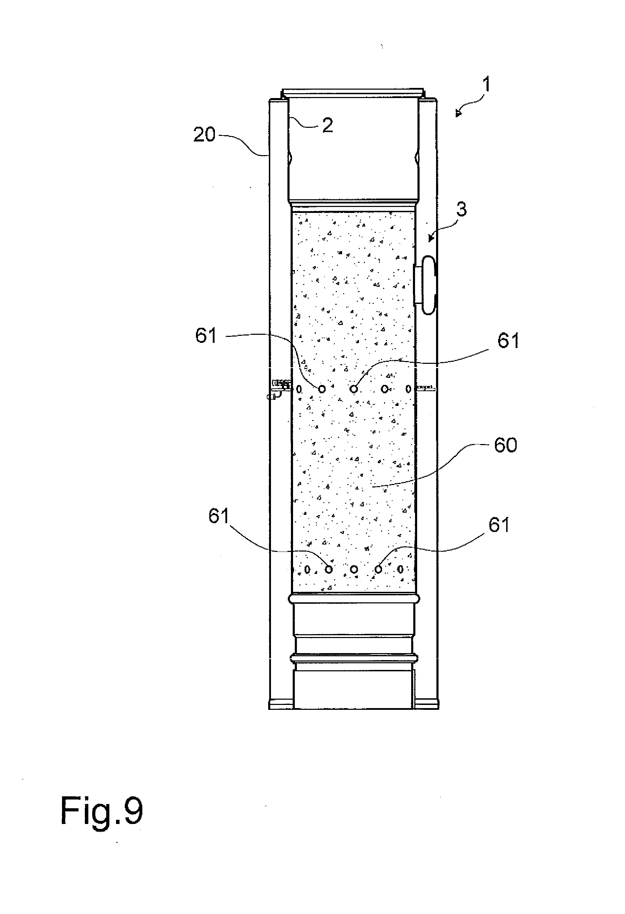

In accordance with a second embodiment of the present invention, shown in figure 9, chimney flue 1 is covered with a material 60 on the internal part of wall 2.

The chemical phenomenon of photocatalysis is based on the property of a chemical substance, the photocatalyst, to accelerate, in the presence of light, the oxidization reactions of the air pollutants thus promoting the reduction thereof to inert substances which are not harmful for man or for the environment. The photocatalyst is a semiconductor which, in relation to its particular electronic configuration, when radiated with radiation having suitable wave length, generates an excited state such as to promote, according to the number of vacancies on the surface thereof, the chemical reactions between the pollutants and the elements typically in the atmosphere. The best photocatalyst known is titanium dioxide, in particular in the crystalline configuration of anatase, a chemical substance capable of generating an extremely stable excited state, when radiated with radiation having wave length less than 400 nm (UV light), whose decay over time is slow and allows a higher performance of the reactions connected with the photocatalysis. Nitrogen oxides NO and NO₂ currently constitute one of the air pollutants having the highest impact on health and on the environment. Hence a highly polluting element may be reduced into a wholly inert element by means of the catalysis supplied by the surfaces containing anatase. The effectiveness of the anatase is not limited to the nitrogen oxides alone, but also relates to other air pollutant factors, from sulphur oxides to benzene compounds. The nitrogen oxides remain the most immediate and reliable markers for checking the entity of the abatement obtained.

The internal part of wall 2 of chimney flue 1 is covered with a semiconductor material 60 with photocatalytic properties (for example, TiO₂). The at least one thermoelectric generator 3 is adapted to turn on a UV lamp 61 again arranged within chimney flue 1 and adjacent to wall 2 and adapted to generate an electromagnetic radiation in the wave length inferior than 400 nm which hits the photocatalytic material 60. The UV radiation activates the photocatalysis process to reduce the pollution element contained in the flue gas.

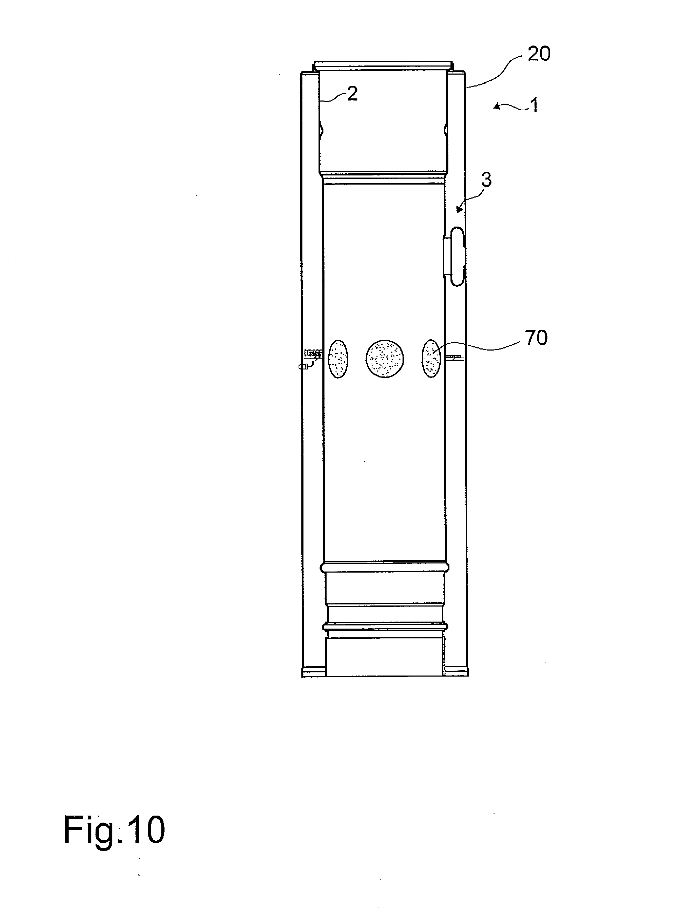

In accordance with a third embodiment of the present invention, shown in figure 10, chimney flue 1 comprises internal means 70, i.e. electrochemical cells comprising ceramic pads having reactant solid electrolyte. The energy obtained during the thermoelectric recovery step, i.e. the electric energy supplied by the at least one thermoelectric generator 3, is employed to generate the electric power sufficient to activate the reaction in the electrochemical cell 70; the activated electrochemical cell 70 will transform, for example, the pollution element NOₓ into N₂ and O₂ so as to reduce the pollution element contained in the flue gas. The electrochemical cells 70 are arranged adjacently to wall 2 of chimney flue 1.

Indeed the decay of the pollution element NOₓ occurs by means of an electrochemical process in which electric energy is supplied to a reactant cell 70 (consisting of a paste in ceramic material on which an electrode of electro-catalytic type in NiO₂ and YSZ is deposited). The presence of the electric energy applied activates cell 70 and the electrode reacts with the pollutant NOₓ by decaying it into N₂ and O₂. The process occurs through a first electrochemical absorption step of the molecule of NO on the surface of the electrode due to the effect of the presence of Ni, and then in a second step by means of the decaying NO absorbed in N₂ on the electrode, which remains while the oxidization occurs ofNi into NiO.

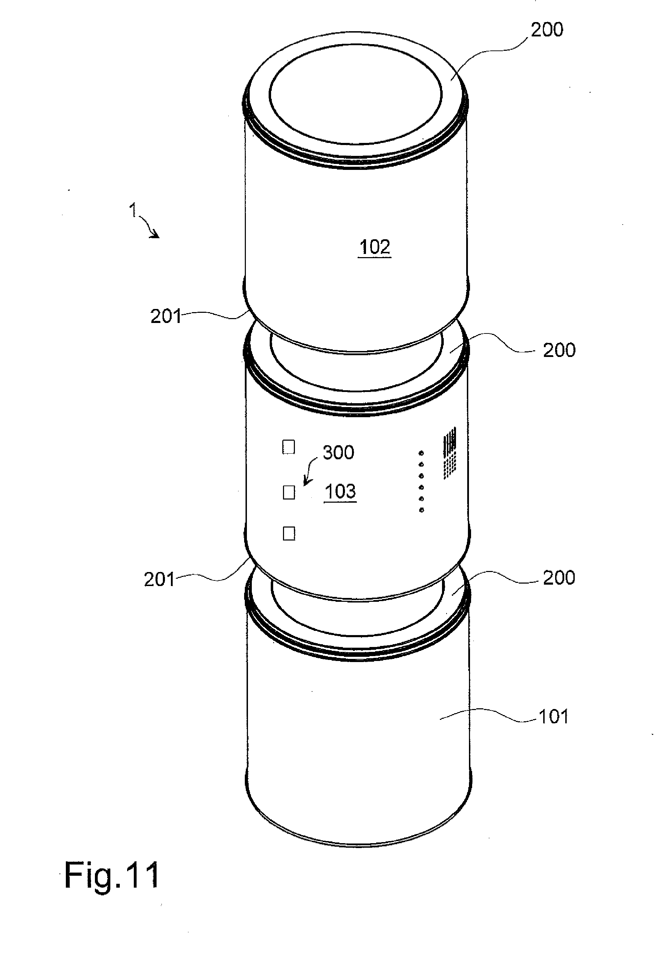

Figures 11-14 show, in greater detail, the chimney flue 1 of the first embodiment of the invention. Said chimney flue 1 is made modularly, i.e. chimney flue 1 comprises a plurality of modules separated from each other but removably couplable with each other; figure 11 only shows three modules 101-103 of the plurality of modules which compose the chimney flue 1. Each module comprises protruding means 200 on the top and/or hollow means 201 on the bottom adapted to be coupled with the respective hollow means 201 or protruding means 200 of another module arranged above or below the former; thereby the modules of the chimney flue are stackable one on the other and are kept in position by engaging the means 200 and 201. The protruding means 200 comprise a top circular projection while the hollow means 201 comprise a bottom circular recess adapted to house the top circular projection of the module arranged below; the engagement of the means 200 and 201 confers a strength to chimney flue 1 similar to the one of a chimney flue made up in a single piece.

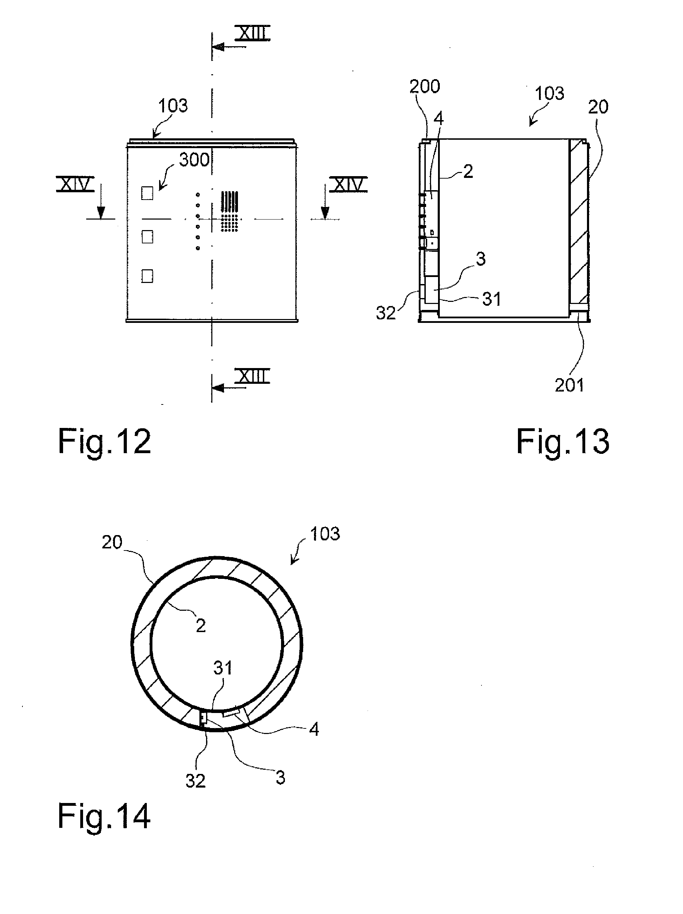

The at least one thermoelectric generator 3, i.e. the Peltier cell, is arranged in a single module 103 of the modules which compose chimney flue 1, as shown in figures 12-14. Thereby, in case of failure or damage, it is possible to only remove module 103 to perform the repair or the replacement of the thermoelectric generator 3 instead of removing the whole chimney flue 1; moreover, again in case of failure or damage, module 103 is easily replaced.

Preferably module 103 also contains the means 4 electrically supplied by said at least one thermoelectric generator 3.

Preferably module 103 comprises one or several connectors 300 arranged on the outer surface of wall 20 or in the inlet thereof between the modular element 103 and one of the elements 101 or 102 to supply one or several sensors or batteries or other electronic devices, thereby quick and easy installation of several elements in succession is possible.

Preferably the chimney flue also comprises a sensor for checking the inclination of any free section of chimney flue (i.e. not anchored) for continuously checking and monitoring the stability of the chimney flue. This may be useful in the case of installations in which the chimney flue, which is free for certain section, may oscillate while keeping the modules hooked.

Preferably the chimney flue comprises a sensor dedicated to checking for the presence of condensation (acidic or neutral) in the chimney flue areas having low inclination and/or a sensor dedicated to checking of the level of oxides (carbon monoxide and dioxide, nitrogen oxides) in the indoor environment where the chimney flue is installed (home) to check for any presence of such elements in harmful quantities generated by the malfunctioning of the boiler to which the chimney flue is connected.

Preferably it is possible to connect other external temperature sensors to the thermoelectric generator 3 of the chimney flue to check for the reaching of critical thresholds in the case, for example, of contact with combustible materials. The application may be useful in the case roofs are crossed: the chimney flue is capable of supplying sensors positioned in contact with the roof beams or in the different layers which separate the chimney flue from the combustible element: wooden beam or wooden slab or for performing other kinds of checks during use considering the fact that chimney flues are designed according to a maximum operating temperature class.

Chimney flue 1 of the second embodiment also preferably comprises the elements present in the chimney flue of the first embodiment of the invention and/or the third embodiment of the invention.

Chimney flue 1 of the third embodiment also preferably comprises the elements present in the chimney flue of the first embodiment of the invention and/or the second embodiment of the invention.

## Claims

1. A chimney flue (1) comprising at least one conduit for outputting flue gas towards the external environment, said at least one conduit comprising at least one wall (2) in contact with the flue gas, said chimney flue comprising at least one thermoelectric generator (3) supplied by the temperature difference between said at least one wall (2) and the external environment, said chimney flue (1) comprising means (4) electrically supplied by said at least one thermoelectric generator, **characterized in that** said chimney flue comprises a plurality of modules (101...103) which are separate but removably couplable with each other, one module (103) of said plurality of modules comprising said thermoelectric generator.

2. A chimney flue according to claim 1, **characterized in that** said means (4) comprise at least one sensor (41-43) adapted to detect a parameter of the flue gas inside the chimney flue.

3. A chimney flue according to claim 2, **characterized in that** said means (4) comprise at least one device (44) adapted for receiving the data detected from at least one sensor (41-43) and at least one alarm device (47) which is activated when said at least one datum detected by the sensor overcomes a specific threshold (Tp, Up, Cp).

4. A chimney flue according to claim 3, **characterized in that** said means (4) comprise an interface (45) for sending the data detected to a unit outside the chimney flue.

5. A chimney flue according to claim 3 or 4, **characterized in that** said means (4) comprise a unit (50) for managing the electric energy generated by the at least one thermoelectric generator (3), said unit (50) being adapted to distribute the electric energy to said at least one sensor (41-43), to said device (44) for receiving the data, to said alarm device (47).

6. A chimney flue according to claim 5, **characterized in that** said management unit (50) comprises a microprocessor (51) and a memory (52) wherein a software is installed and is operative, said management unit (50) being adapted to activate in sequential way first the at least one sensor (41-43), then said device (44) for receiving the data, and successively said alarm device (47) and said interface.

7. A chimney flue according to claim 1, **characterized in that** said means (4) comprise batteries (46) for accumulating the non-used electric energy.

8. A chimney flue according to claim 1, **characterized in that** it comprises an internal cylindrical wall (2) in contact with the flue gas and an metallic external cylindrical wall (20) in contact with the external environment and insulated from the internal cylindrical wall (2), said at least one thermoelectric generator (3) comprising two end terminals opposite to each other and in contact respectively with said internal cylindrical wall (2) and with said metallic external cylindrical wall (20).

9. A chimney flue according to claim 1, **characterized in that** the internal surface of said wall (2) of the chimney flue (1) which is in contact with the flue gas, is covered with a semiconductor material (60) having photocatalytic properties, said means (4) of said chimney flue (1) comprising at least one UV lamp (61) supplied by said at least one thermoelectric generator (3) and adapted to generate an electromagnetic radiation for activating the photocatalysis process for reducing the pollution elements contained in the flue gas.

10. A chimney flue according to claim 1, **characterized in that** said means (4) comprise at least one electrochemical cell (70) comprising at least one ceramic paste with reactant solid electrolyte and arranged within the chimney flue, said at least one electrochemical cell (70) being supplied by said at least one thermoelectric generator (3) for transformating pollution elements present in the flue gas.

11. A chimney flue according to claim 1, **characterized in that** said wall (2) in contact with the flue gas is made up with plastic material.

12. A chimney flue according to claim 1, **characterized in that** said wall (2) in contact with the flue gas is made up with metallic material.

13. A chimney flue according to claim 1, **characterized in that** said module (103) comprising the at least one thermoelectric generator comprises said means (4) electrically supplied by said at least one thermoelectric generator.

14. A chimney flue according to claim 8, **characterized in that** said module (103) comprises at least one connector (300) for supplying the at least one sensor or other electronic devices arranged in the outer wall (20).

15. A chimney flue according to claim 1, **characterized in that** each module of the plurality of modules of the chimney flue comprises protruding means (200) arranged on the top and/or hollow means (201) arranged on the bottom adapted to be coupled with the respective hollow means (201) or protruding means (200) of another module of the plurality of modules arranged above or below the former.
